(19) Europäisches Patentamt
European Patent Office
Office européen des brevets

(11) Veröffentlichungsnummer: **0 087 061**
**A1**

(12) # EUROPÄISCHE PATENTANMELDUNG

(21) Anmeldenummer: 83101213.3

(22) Anmeldetag: 09.02.83

(51) Int. Cl.³: C 03 B 37/025
C 03 B 37/07, G 01 B 11/10
G 01 M 11/00

(30) Priorität: 20.02.82 DE 3206144

(43) Veröffentlichungstag der Anmeldung: 31.08.83 Patentblatt 83/35

(84) Benannte Vertragsstaaten: DE FR GB IT NL

(71) Anmelder: Licentia Patent-Verwaltungs-GmbH
Theodor-Stern-Kai 1
D-6000 Frankfurt/Main 70(DE)

(72) Erfinder: Huber, Hans-Peter, Dipl.-Phys.
Paul-Lincke-Strasse 24
D-7910 Neu-Ulm(DE)

(74) Vertreter: Amersbach, Werner, Dipl.-Ing. et al,
Licentia Patent-Verwaltungs-GmbH Theodor-Stern-Kai 1
D-6000 Frankfurt 70(DE)

(54) **Verfahren zur Herstellung eines Lichtwellenleiters.**

(57) Die Erfindung betrifft ein Herstellungsverfahren für Lichtwellenleiter, insbesondere optische Glasfasern, bei denen ein Brechzahleinbruch ("Dip") in der Kernmitte vermieden wird durch eine Steuerung und/oder Regelung des dafür maßgebenden Dotierungsmittels.

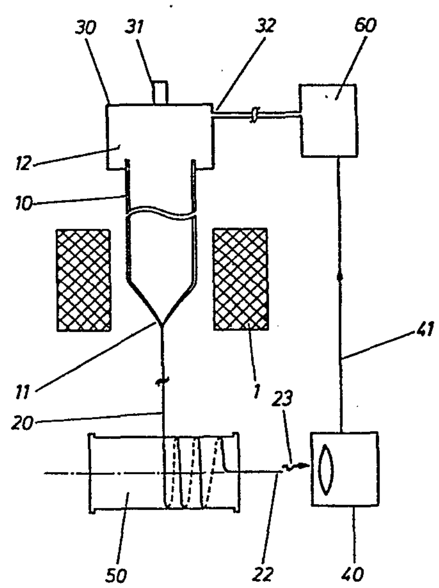


EP 0 087 061 A1

0087061



Licentia Patent-Verwaltungs-GmbH
Theodor-Stern-Kai 1
D-6000 Frankfurt 70

PTL-UL/Ja/lh
UL 82/7

Beschreibung

"Verfahren zur Herstellung eines Lichtwellenleiters"

Die Erfindung betrifft ein Verfahren zur Herstellung eines Lichtwellenleiters nach dem Oberbegriff des Patentanspruchs 1.

Die Erfindung wird im folgenden anhand eines beispielhaft gewählten Glasfaser-Lichtwellenleiters erläutert, der aus einem zylinderförmigen Kernglas und einen diesen umgebenden Mantelglas besteht.

Bei einem derartigen Lichtwellenleiter, insbesondere einem sogenannten Multimode-Gradientenprofillichtwellenleiter, ist die Form des optischen Brechzahlprofils ein wesentlicher Faktor für die optische Übertragungsbandbreite. Der günstigste vom Radius r abhängige Brechzahlverlauf n(r) im Kernbereich eines derartigen Lichtwellenleiters wird z.B. durch die Formel

$$n(r) = n_o \left(1 - \left(\frac{r}{a}\right)^{\alpha} \Delta\right)$$

...

beschrieben, bei der $n_0$ die Brechzahl in der Kernmitte, $\Delta$ die relative Brechzahldifferenz zwischen Kern- und Mantelglas, a den maximalen Kernradius und $\alpha$ einen Exponenten mit einem Wert von ungefähr 2 bedeuten.

Bei der Herstellung von Lichtwellenleitern, z.B. nach dem sogenannten CVD-Verfahren, aus Vorformrohren, z.B. dotierten Quarzglasrohren, tritt als typischer Fehler im Brechzahlverlauf, durch Abdampfen von Dotierstoff aus der inneren Rohrwand, ein Brechzahleinbruch, auch "Dip" genannt, in der Kernmitte auf. Dieser Brechzahleinbruch hat je nach Breite und Tiefe eine erhebliche Verringerung der optischen Übertragungsbandbreite gegenüber dem optimalen Brechzahlprofil zur Folge.

Zur Vermeidung des Brechzahleinbruchs ist vorgeschlagen worden, den inneren Bereich der Kernschichten eines Vorformrohres um soviel stärker zu dotieren, daß nach Abdampfen einer gewissen Menge Dotierstoffes während des Kollabierprozesses die tatsächlich erforderliche Dotierstoffmenge übrig bleibt. Nachteilig bei diesem Verfahren ist, daß die Kompensation der durch Verdampfen verlorengegangenen Dotierstoffmenge schlecht reproduzierbar ist. Aus dem Artikel von Takeshi Akamatsu et al "Fabrication of graded-index fibers without an index dip by chemical vapor deposition method", Applied Physics Letters, Vol. 31, No. 8, 15 October 1977, S. 515 bis 517, ist es außerdem bekannt, ein Vorformrohr aus Quarzglas innen mit Germanium (Ge) zu dotieren und während des Kollabierprozesses eine bestimmte Menge $GeCl_4$-Dampf durch das Vorformrohr strömen zu lassen, so daß durch einen bestimmten Partialdampfdruck von $GeCl_4$ im Rohrinnern ein Verarmen an $GeO_2$ aufgrund der sich einstellenden Gleichgewichtsreaktion

$$GeCl_4 + O_2 \leftrightharpoons GeO_2 + 2Cl_2$$

...

verhindert wird. Dieses Verfahren hat den Nachteil, daß die Vorformherstellung durch den notwendigen Kollabierprozeß unter genau definierten Strömungsverhältnissen erfolgen muß und daher zeitaufwendig sowie kostenungünstig ist.

Aufgabe der Erfindung ist es, ein gattungsgemäßes Verfahren anzugeben, das es auf kostengünstige und sichere Weise ermöglicht, aus mindestens einem Vorformrohr einen Lichtwellenleiter herzustellen, bei dessen Kernmitte ein Brechzahleinbruch vermieden wird.

Diese Aufgabe wird gelöst durch die Kombination der im kennzeichnenden Teil des Patentanspruchs 1 angegebenen Merkmale. Ausgestaltungen und Weiterbildungen sind den Unteransprüchen entnehmbar.

Die Erfindung wird im folgenden anhand eines Ausführungsbeispiels unter Bezugnahme auf eine schematische Zeichnung näher erläutert.

Die Figur zeigt ein mit mindestens einer dotierten Schicht innenbeschichtetes Vorformrohr 10, z.B. ein Quarzglasrohr, das an seinem ersten Ende 11 mit Hilfe eines Ofens 1 derart erhitzt wird, daß das Vorformrohr dort zu einer sogenannten Ziehzwiebel kollabiert, aus der ein Lichtwellenleiter 20 gezogen wird. Zumindest während dieses Ziehvorganges wird das Vorformrohr 10 an seinem dem ersten Ende 11 abgewandten Ende 12 mit einer Halterung 30 im wesentlichen gas- und/oder dampfdicht abgeschlossen. Die Halterung 30 besitzt einen Zapfen 31, als Befestigungsvorrichtung für eine nicht dargestellte Lichtwellenleiter-Ziehvorrichtung, sowie mindestens einen absperrbaren Rohrstutzen 32, über den dem Innenraum des Vorformrohres Gase

...

und/oder Dämpfe zu- oder abgeführt werden, z.B. mit Hilfe einer Versorgungseinheit 60, die entsprechend Gaserzeuger zum Füllen des Vorformrohres sowie eine Vakuumpumpe zum Entleeren des Vorformrohres enthält. Dadurch wird erreicht, daß zumindest während des Ziehvorganges im Innenraum des Vorformrohres ein genau bestimmbarer Partialdruck des Dotierungsmittels, z.B. Germaniumchlorid ($GeCl_4$), aufrechterhalten wird, das für die optische Brechzahl in der Kernmitte des Lichtwellenleiters 20 maßgebend ist. Beispielsweise wird vor Beginn des Ziehvorganges in das Innere des Vorformrohres 10 eine vorbestimmte Menge des gasförmigen Dotierungsmittels, z.B. $GeCl_4$, eingebracht. Da sich das Vorformrohr 10 während des Ziehvorganges verkürzt, wird überschüssiges Dotierungsmittel in einer genau kontrollierten Weise mit Hilfe der Versorgungseinheit 60 abgeführt. Wird bei einem Vorformrohr 10, das im wesentlichen aus Quarzglas besteht, $GeCl_4$ als Dotierungsmittel verwendet, so zersetzt sich dieses während des Ziehvorganges derart, daß gasförmiges Chlor ($Cl_2$) entsteht mit einem Partialdruck, der vorteilhafterweise im Innenraum des Vorformrohres 10 eine Verringerung des $OH^-$-Gehaltes des Quarzglases bewirkt, gemäß der Reaktionsgleichung

$$2OH^- + Cl_2 \leftrightharpoons 2HCl + O_2.$$

Dieses chemische Gleichgewicht wird beim Ziehvorgang, der bei ungefähr 2000°C stattfindet, zur rechten Seite der Reaktionsgleichung verschoben, so daß eine Umwandlung eventuell vorhandener $OH^-$-Ionen in gasförmiges HCl stattfindet. Dieser HCl-Dampf wird zeitlich fortlaufend abgeführt, z.B. durch eine zeitlich fortlaufende $GeCl_4$-Spülung, die durch die Versorgungseinheit 60 bewirkt wird.

...

Eine Regelung zumindest des Dotierungsmittels wird dadurch erreicht, daß während des Ziehvorganges im Bereich des ersten Endes 11, der Ziehzwiebel, Licht in den Lichtwellenleiter 20 eingekoppelt wird. Dazu wird beispielsweise das Licht verwendet, das infolge der hohen Temperaturen (ungefähr 2000°C) beim Ziehvorgang entsteht. Der entstehende Lichtwellenleiter 20 wird derart auf eine Wickeltrommel 50 aufgewickelt, daß das zweite Ende 22 des Lichtwellenleiters 20 im wesentlichen axial aus der Wickeltrommel 50 herausgeführt wird. Das aus dem zweiten Ende 22 austretende Licht 23 wird in einer Meßeinrichtung 40 ausgewertet, die z.B. selbsttätig die sogenannte optische Nahfeldverteilung des Lichtwellenleiters 20 bestimmt und daraus ein Regelsignal herleitet, das über eine elektrische Verbindungsleitung 41 der Versorgungseinheit 60 zugeführt wird. Das Regelsignal bewirkt dort zumindest eine Regelung des Dotierungsmittels, das für die optische Brechzahl in der Kernmitte des Lichtwellenleiters maßgebend ist.

...

Licentia Patent-Verwaltungs-GmbH
Theodor-Stern-Kai 1
D-6000 Frankfurt 70

PTL-UL/Ja/lh
UL 82/7

Patentansprüche

1. Verfahren zur Herstellung eines Lichtwellenleiters ohne Brechzahleinbruch in der Kernmitte aus einem mit mindestens einer dotierten Schicht innenbeschichteten Vorformrohr, gekennzeichnet durch die Kombination folgender Merkmale:

a) durch einen gleichzeitig angewandten Kollabier- und Ziehvorgang wird ein erstes Ende (11) des Vorformrohres (10) zu einem Lichtwellenleiter (20) ausgezogen,

b) das dem ersten Ende (11) abgewandte Ende (12) des Vorformrohres (10) wird durch eine gas- und/oder dampfdicht verschließbare Halterung (30) derart abgeschlossen, daß zumindest während des Ziehvorgangs eine Steuerung oder Regelung des Partialdruckes des Dotierungsmittels möglich wird, das für die optische Brechzahl der Kernmitte maßgebend ist.

...

2. Verfahren nach Anspruch 1, dadurch gekennzeichnet, daß während des Ziehvorgangs im Bereich des ersten Endes (11) in den Lichtwellenleiter Licht eingekoppelt wird, das nach Durchlaufen zumindest eines Teilstückes des Lichtwellenleiters aus diesem ausgekoppelt und einer optischen Meßeinrichtung (40) zugeführt wird, nach deren Maßgabe zumindest der Partialdruck des Dotierungsmittels gesteuert oder geregelt wird.

3. Verfahren nach Anspruch 2, dadurch gekennzeichnet, daß der Lichtwellenleiter während des Ziehvorganges auf eine Wickeltrommel (50) aufgewickelt wird, daß das dem ersten Ende (11) abgewandte zweite Ende (22) des Lichtwellenleiters im wesentlichen axial aus der Wickeltrommel (50) herausgeführt wird und daß das aus dem zweiten Ende (22) ausgekoppelte Licht der Meßeinrichtung (40) zugeführt wird.

4. Verfahren nach einem der Ansprüche 1 bis 3, dadurch gekennzeichnet, daß das Vorformrohr im wesentlichen aus Quarzglas besteht und daß zur Einstellung der optischen Brechzahl der Kernmitte des Lichtwellenleiters ein Dotierungsmittel verwendet wird, das das chemische Element Germanium enthält.

5. Verfahren nach Anspruch 4, dadurch gekennzeichnet, daß das Dotierungsmittel Germaniumchlorid ($GeCl_4$) enthält und daß das während des Ziehvorganges daraus entstehende Chlor ($Cl_2$) zur Verringerung von möglicherweise vorhandenen störenden $OH^-$-Ionen verwendet wird.

...

0087061

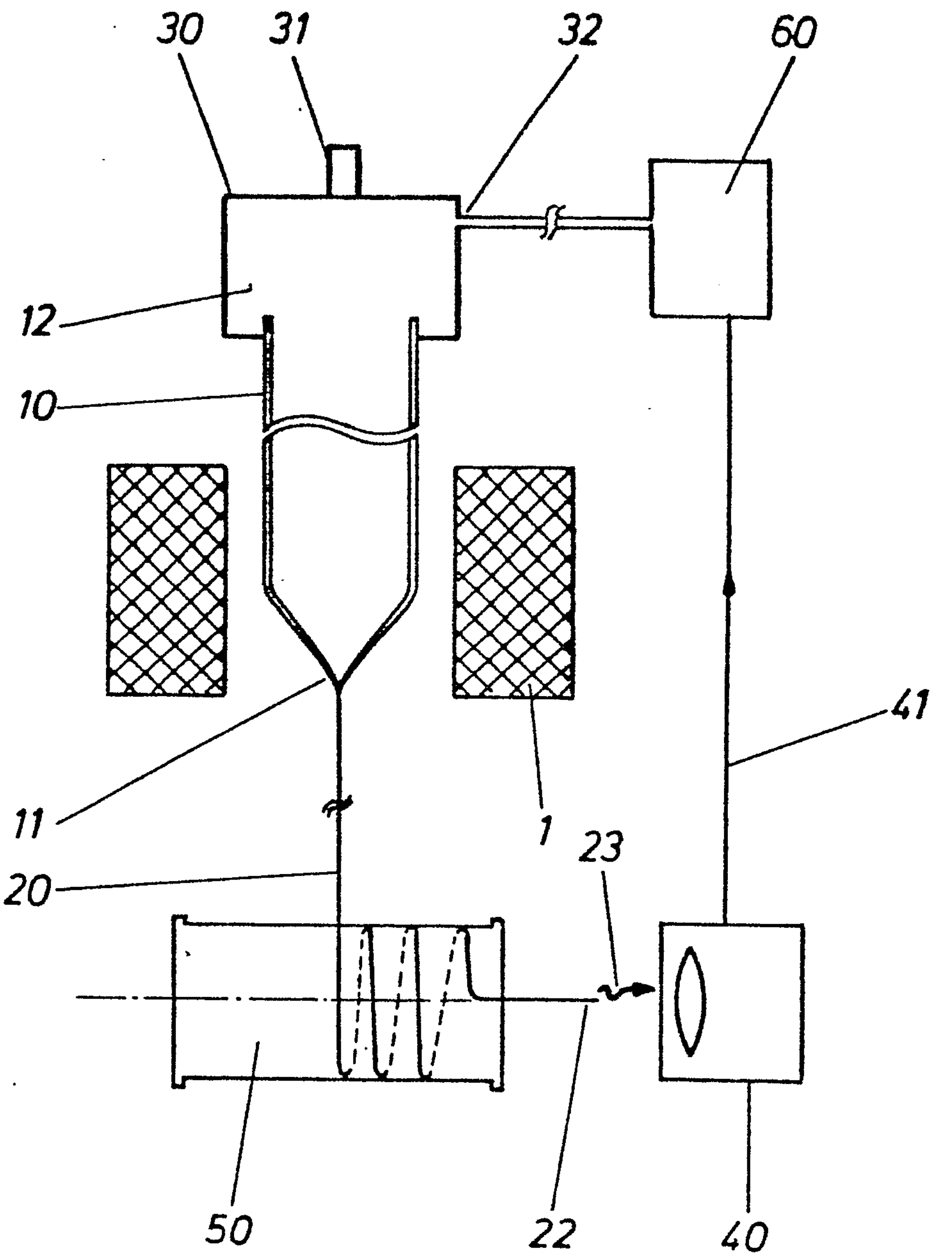

Europäisches Patentamt

# EUROPÄISCHER RECHERCHENBERICHT

0087061
Nummer der Anmeldung

EP 83 10 1213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | GB-A-2 009 137 (BREHM)<br>* Insgesamt *<br>--- | 1,4 | C 03 B 37/025<br>C 03 B 37/07<br>G 01 B 11/10<br>G 01 M 11/00 |
| X | US-A-4 304 581 (SAIFI)<br>* Insgesamt *<br>--- | 1,4,5 | |
| Y | GB-A-2 074 723 (PRESBY)<br>* Insgesamt *<br>--- | 1,2,3 | |
| A | US-A-4 165 224 (IRVEN)<br>* Insgesamt *<br>--- | 1 | |
| A | US-A-4 161 656 (MARCUSE)<br>* Insgesamt *<br>--- | 1 | |
| A | US-A-3 711 262 (KECK)<br>* Insgesamt *<br>----- | 1 | **RECHERCHIERTE SACHGEBIETE (Int. Cl. 3)**<br>C 03 B 37/00<br>G 01 B 11/00<br>G 01 M 11/00 |

Der vorliegende Recherchenbericht wurde für alle Patentansprüche erstellt.

| Recherchenort | Abschlußdatum der Recherche | Prüfer |
|---|---|---|
| DEN HAAG | 03-05-1983 | VAN DEN BOSSCHE W.L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82